# EUROPEAN PATENT SPECIFICATION

(11) **EP 2 875 219 B1**
(45) Date of publication and mention of the grant of the patent: **01.02.2017**
(21) Application number: 13737385.8
(22) Date of filing: 21.05.2013
(51) Int. Cl.: F01P 7/14, F16K 11/04, F16K 11/052

(54) **VALVE GROUP FOR VEHICLES COOLING SYSTEM**
VENTILGRUPPE FÜR EIN FAHRZEUGKÜHLSYSTEM
GROUPE SOUPAPE POUR SYSTÈME DE REFROIDISSEMENT DE VÉHICULES

(30) Priority: 19.07.2012 IT BS20120111
(43) Date of publication of application: 27.05.2015
(73) Proprietor: Industrie Saleri Italo S.P.A., 25065 Lumezzane, Brescia (IT)
(72) Inventor: BELCUORE, Daniele, I-25065 Lumezzane, Brescia (IT)
(74) Representative: Pulieri, Gianluca Antonio
(86) International application number: PCT/IB2013/054171
(87) International publication number: WO 2014/013351

(56) References cited:
- EP-A2- 1 001 199
- EP-A2- 1 270 893
- DE-A1- 2 804 853
- FR-A1- 2 879 712
- US-A- 5 950 576

## Description

The present invention relates to a valve group for cooling systems, in particular for vehicles.

In particular the valve group is suitable for being used in a cooling system of a vehicle suitable for cooling an endothermic motor with a double cylinder bank. The vehicle is preferably a car or a motorcycle.

The valve group which the present invention relates to is suitable for controlling the cooling of other components of the vehicle, regardless of the cooling of the cylinder banks of the endothermic engine; preferably said other components, depending on the embodiments of the system, are further components external to the motor or further components of the motor other than the cylinder banks, such as the heads.

It is well known that a cooling system or circuit for thermic engines, especially in the vehicle sector, is decidedly complex in structure and requires special attention to the components and fluidic communication between them. Great attention is therefore paid to the correct design of the components such as pumps or valves with particular focus on a continual improvement of performance.

One example of a cooling pump is shown in document BS2010A000122 (WO2012007887) in the Applicant's name.

Valve groups are known of which are suitable for controlling the cooling of other components downstream of the cooling pump, as well as further elements of.said motor or other inner components of the vehicle, see for example EP 1 001 199.

Said valve groups need to as limited dimensions as possible, be as simple to operate as possible and be as reliable as possible.

Conversely, when produced in small dimensions and in as simple to operate a manner as possible, valve groups are often not very reliable, in particular presenting leakage problems.

The purpose of the present invention is to make a valve group for a cooling system suitable for regulating the fluidic communication in secondary, bled off or capillary ducts to the main cooling ducts of the motor cylinder banks, according to the aforementioned requirements but characterised by greater reliability.

Such purpose is achieved by a valve group made according to claim 1.

Specially, such purpose is achieved by a valve group for a cooling system for vehicles which comprises a inlet first and a second duct, the last separate from said first duct, and an exit duct in fluidic communication with the first duct and with the second duct. In particular, the first duct, at least in its final portion, extends around the second duct, at least in its final portion. The valve group comprises a closure element movable between a closed position, in which the closure element obstructs the entrance of cooling liquid from the first duct and the second duct, and an open position, in which permits the fluidic communication between the first duct and the second duct with the exit duct. In other words, the valve group claimed in claim 1 is able to control both inlets simultaneously.

The characteristics and advantages of the valve group according to the present invention will be evident from the description given below, by way of a non-limiting example, according to the appended drawings, wherein:
- figure 1 shows a diagram of a cooling system for thermic motor vehicles with double cylinder bank comprising the valve group according to the present invention, according to one embodiment, in which the cooling liquid controlled by the valve group is suitable for cooling further components of the.vehicle outside the endothermic motor;
- figure 1a shows another diagram of a cooling system for thermic motor vehicles with double cylinder bank comprising the valve group according to the present invention, according to a further embodiment, in which the cooling liquid controlled by the valve group is suitable for cooling further parts of the endothermic motor, such as the cylinder heads ;

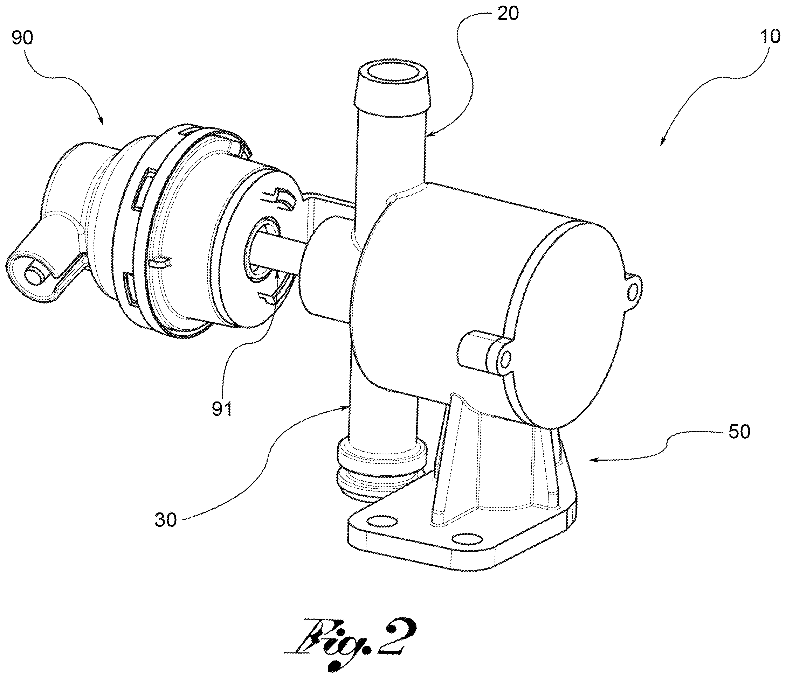

- figure 2 is an axonometric view of the valve according to one embodiment; not included in the present invention;

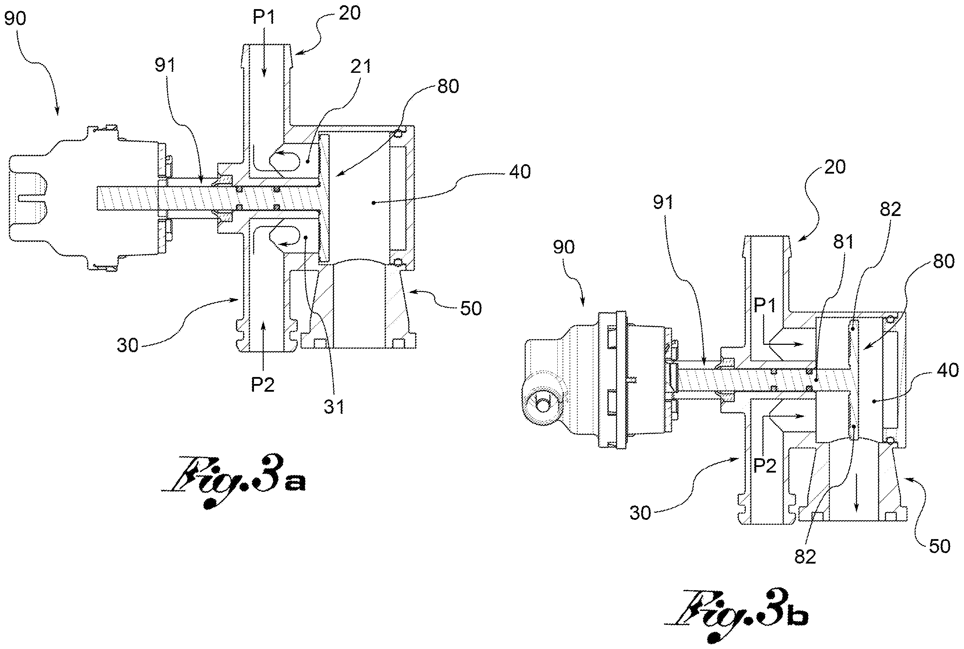

- figures 3a and 3b are two cross-sections of the valve group in figure 2 in a closed and in an open configuration;

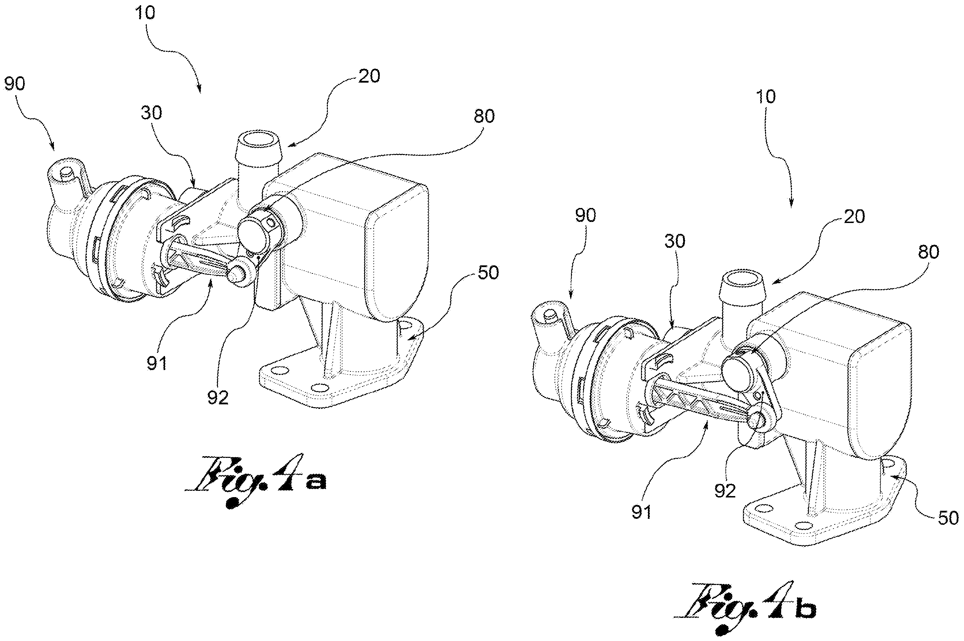

- figures 4a and 4b are two axonometric views of the valve group according to the present invention, in a closed configuration and in an open configuration;

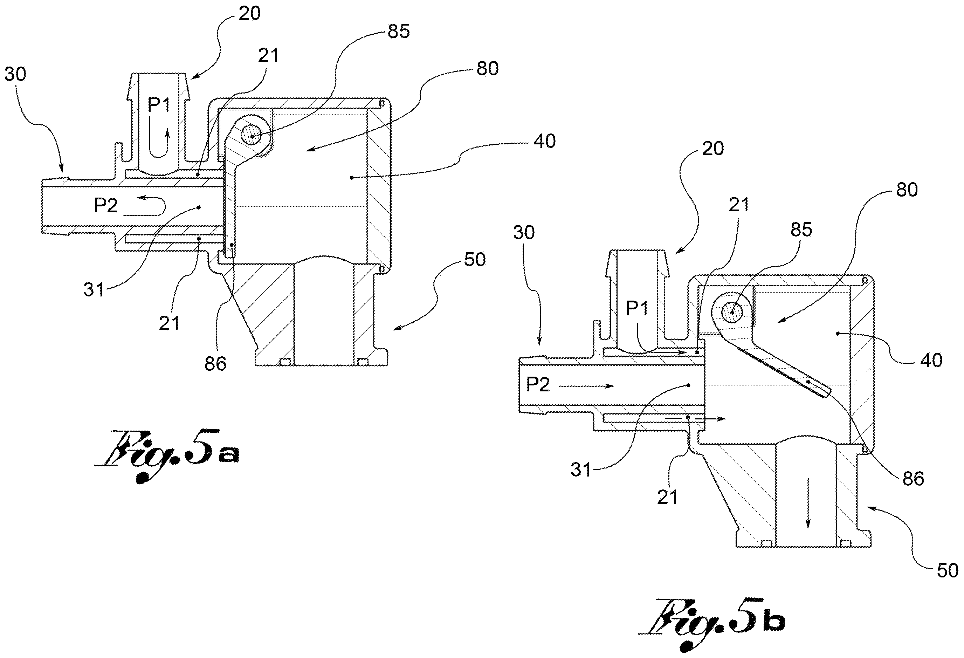

- figures 5a and 5b are two cross-sections of the valve group respectively in figures 4a and 4b in a closed and in an open configuration.

According to one embodiment of the present invention, in the appended drawings, reference numeral 10 denotes a valve group for cooling systems 1.

The valve group 10 is specifically for vehicle cooling systems 1, preferably cars or motorcycles, and specifically for those with endothermic combustion engines 501 having two cylinder banks 502 and 503.

In a preferred embodiment, the valve group 10 comprises two entry ducts 20 and 30 suitable for permitting the entrance inside the valve group 10 of a cooling liquid.

In particular, the valve group 10 comprises a first duct 20 suitable for permitting the entrance inside the valve group 10 through a first mouth 21; the first duct 20 is of such dimensions as to permit the passage of a first flow P1 of cooling liquid.

In the same way, the valve group 10 comprises a second duct 30 suitable for permitting the entrance inside the valve group 10 through a second mouth 31; the second duct 30 is of such dimensions as to permit the passage of a second flow P2 of cooling liquid.

Preferably the first duct 20 is of comparable dimensions to those of the second duct 30, so that the first flow P1 is quantitatively comparable to the second flow P2.

In a preferred embodiment, the first duct 20 is separate from the second duct 30.

For example, the two ducts extend in an opposite or parallel or perpendicular direction without meeting so as to join the two flows along their extension.

In a preferred embodiment, the two ducts meet in a portion thereof while keeping the flows P1 and P2 separate from each other; in fact, in a preferred embodiment, the first duct 20, at least in a final portion thereof, such as the first mouth 21, extends around the second duct 30, at least in a final portion thereof, for example the second mouth 31.

Preferably, the valve group 10 comprises, so as to permit the exit from inside it, an exit duct 50 in fluidic communication with the first duct 20 and the second duct 30; the first flow P1 and the second flow P2 of cooling liquid, entering from the first mouth 20 and from the second mouth 30, are thus suitable for exiting from the valve group 10 through the exit duct 50.

Preferably, in order to regulate the aforesaid exit of the cooling liquid the valve group 10 comprises a closure element 80.

The closure element 80 is movable between a closed position and an open position. In the closed position, the closure element 80 is positioned respectively on said first and second mouths 21 and 31 and obstructs the entrance of cooling liquid from the first duct 20 and from the second duct 30, while in open position it is distanced from said first and second mouths 21, 31 and permits the fluidic communication between the first duct 20 and the second duct 30 with the exit duct 50;

Preferably, when the closure element 80 is in the closed position, it is positioned so as to seal said first mouth 21 and second mouth 31. In other words, the presence of the closure element 80 hermetically obstructs the passage of the cooling liquid and specifically of the first flow and of the second flow P2.

In a preferred embodiment, in order to position said closure element 80, the valve group 10 comprises specific command means 90.

Preferably, the command means 90 comprise a command element 91 translatable along an axis suitable for engaging and moving the closure element 80 between the aforesaid closed and open positions.

As said, in the closed position, the closure element 80 prevents any leakage from the first mouth 21 and from the second mouth 31 which it is placed on; in particular, this is due to the fact that when the command means 90, position the closure element 80 in the closed position, they exert a greater force on the closure element 80 than the action due to the first flow P1 and to the second flow P2, coming out of said mouths.

Specifically, the engagement between the command element 91 and the closure element 80 varies from one embodiment to another. In some variants in fact said interaction between components is of the direct type, while in other it is indirect, that is to say by means of further specific components.

In a preferred embodiment, the command element 91 engages in a direct manner, the closure element 80 in turn which translates axially.

In other words, a translation of the command element 91 corresponds to a translation of the closure element 80.

Preferably, the closure element 80 comprises a stem 81 directly connected to the command element 91 and a head 82, preferably at the other end of the stem 81; the head 82 is suitable for being positioned, moving the stem 81 in translation, on the first mouth 21 and on the second mouth 31.

In said embodiment therefore the closure element 80 is substantially mushroom-shaped.

According to said embodiment, preferably, the first duct 20 and the second duct 30 have at least in a portion thereof such as the final portion, next to the first mouth 21 and the second mouth 31 with a radial or parallel extension to the stem 81.

In a further embodiment variation, the command element 91 indirectly engages the closure element 80; in particular the two elements communicate with each other by means of a lever 92 comprised in the command means 90 suitable for transforming the axial movement of the command element 91 into rotary movement of the closure element 80.

Preferably, in fact, the closure element 80 comprises a pin 85 connected to said lever 92 and a blade 86 suitable for being positioned, following rotation of the lever 92 and thus of the pin 85 to which it is hinged, on the first mouth 21 and on the second mouth 31.

The blade 86 is therefore suitable for positioning on the two mouths so as to seal them and thus block the flows P1 and P2.

In a preferred embodiment, the valve group 10 comprises a mixing chamber 40 between the first mouth 21 and the second mouth 31 and the exit duct 50, both in the embodiment with the direct engagement and in the embodiment with the indirect engagement between the various components.

Preferably, the mixing chamber 40 is in addition suitable for containing the closure element 80 between the closed position and the open position. In other words, the mixing chamber is suitable for being sized, and thus designed and manufactured according to the dimensions of the closure element 80 itself, and the space occupied thereby when moved.

In a preferred embodiment, the first flow P1 and the second flow P2 merge in the mixing chamber to then exit from the valve group 10 through the exit duct 50.

In a preferred embodiment, said command means 80 comprise an actuator, preferably pneumatic, preferably a vacuum actuator.

In other embodiments, the command means comprise one or more mechanical or electronic elements suitable for moving the command element 81 in translation along an axis.

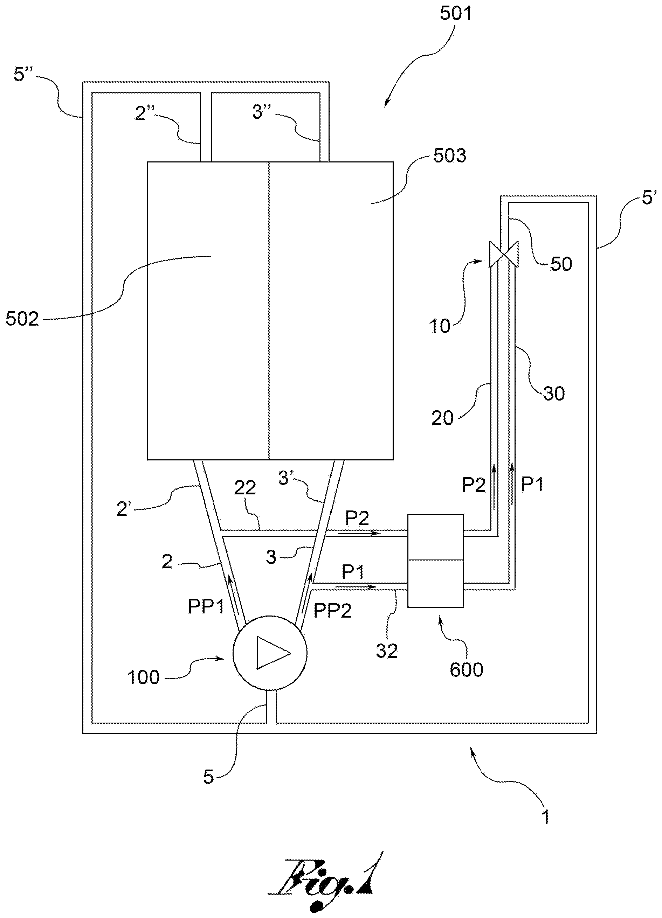

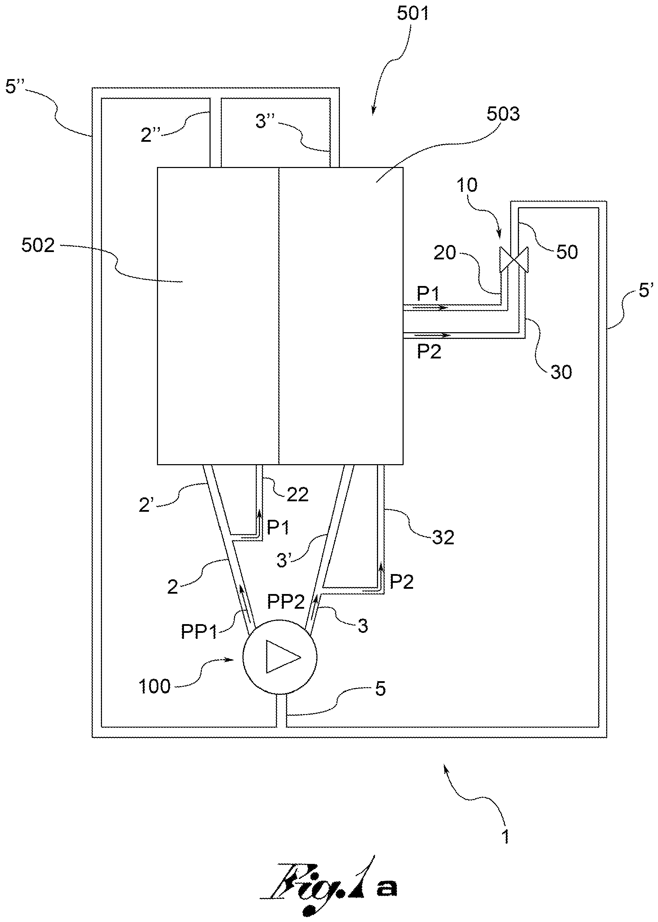

Below a cooling system 1 for vehicles with endothermic motors having double cylinder banks 501 comprising at least one of the valves according to the present invention is described in a non-limiting manner. In the description of the cooling system described below, reference will also be made to the diagrams shown in the appended figures 1 and 1a, showing in a schematic form the logic scheme of said system in two embodiments.

Preferably, the cooling system 1 also comprises a cooling pump 100 as well as the valve group 10.

Preferably, said cooling pump 100 is suitable for moving two main flows PP1 and PP2 of cooling liquid towards two respective cylinder banks 502, 503 of the endothermic motor through two respective main ducts 2 and 3.

Preferably, the main ducts 2 and 3 comprise main entrance ducts 2', 3', in input to the respective cylinder bank and main exit ducts 2", 3" in output from the respective cylinder bank. Said main exit ducts 2", 3" are in fluidic communication with a single main return duct 5", suitable to return the cooling liquid to the pump 100.

The cooling system 1 comprises a valve group 10 according to the embodiments described above, which proves to be, inside the system 1, suitable for controlling the cooling of other vehicle components preferably external to the endothermic motor (fig. 1) or inside the endothermic motor such as the heads (fig.1a) as well as the cylinder banks; preferably, said components are positioned upstream of the valve group 10 (both in fig. 1 and in fig. 1a) or, in other embodiments downstream thereof.

In said embodiment the first duct 20 and the second duct 30 of the valve group 10 are respectively in communication with two capillary ducts 22 and 33 bled off from two main ducts 2, 3, preferably from the main entry ducts 2' and 3'. The exit duct 50 instead is preferably in fluidic communication with a return exit duct 5', which in fact returns to the pump 100 the cooling liquid coming out of the valve group 10.

Lastly, the system 1 preferably provides a pump entrance duct 5, in input to the cooling pump 100, in fluidic communication with the main return duct 5" from the cylinder banks 502, 503 and the return exit duct 5' from the valve group 10.

In a preferred embodiment, the capillary ducts 22 and 32 are suitable for permitting the passage of the first flow P1 and of the second flow P2; preferably they are substantially sized to a smaller order of magnitude than the respective main ducts 2 and 3. In other words, preferably, the first main flow P1 is substantially quantitatively one tenth of the first main flow PP1, and similarly, the second main flow P2 is substantially quantitatively one tenth of the second main flow PP2.

Preferably, the two capillary ducts 22 and 32 are thus suitable for cooling further components other than the cylinder banks 502 and 503 of the endothermic motor, for example inside said endothermic motor, such as the heads or the base (fig. 1a), or even additional components 600 external to the endothermic motor (fig. 1).

Preferably, thanks to the characteristics of the valve group 10 as described above, in the closed position it keeps the first and the second flows P1 and P2 separate and thereby keeps the respective main flows PP1 and PP2 separate.

Innovatively, the valve group which the present invention relates to placed in a cooling system of a vehicle and relative motor, permits immediate and reliable control of the passage of two separate flows of cooling liquid.

Advantageously, the two flows of liquid are kept separate from each other as far as the valve group.

In addition, advantageously, the flows of cooling liquid are only mixed with each other downstream of the closure element.

According to a further advantageous aspect, the valve group, and in particular its closure element obstructs the passage in input of the flows in that in the closed position it positions itself over the duct mouths; thus only the force with which the closure element needs to be kept closed needs to be calibrated so as to withstand the action due to the two flows; advantageously, this all proves very simple and this way a sealed closure is obtained keeping the two flows of liquid entirely separate , avoiding leakages or similar problems.

According to yet a further advantageous aspect, there are therefore no sealing surfaces and the obstruction is achieved by placing the closure element directly over the mouths.

Advantageously, the valve group is suitable for operating with small sized ducts, specifically for moving limited flows.

In addition, advantageously, the movement of the closure element may, in an extremely simple manner, be achieved by command means suitable for translating along an axis.

According to a further advantageous aspect, the geometry of the valve group is extremely simple.

According to yet a further advantageous aspect, the valve group proves extremely compact and of reduced dimensions and therefore easy to insert inside the vehicle. Advantageously, in fact, the only space occupied is due to the dimensions of the command element and the space needed for its movement.

Advantageously, in the cooling system, thanks to the valve group, other components, as well as the cylinder banks of the endothermic motor can be cooled or the cooling thereof controlled; specifically, further inner components of the endothermic motor can be cooled, or further components external to it.

It is clear that a person skilled in the art may make modifications to the valve group and system described above so as to satisfy contingent requirements, all contained within the scope of protection as defined by the following claims.

## Claims

1. Valve group (10) for a cooling system for vehicles comprising:
- a first duct (20) suitable for permitting the entrance, through a first mouth (21), of a first flow (P1) of cooling liquid;
- a second duct (30), separate from said first duct (20), suitable for permitting the entrance, through a second mouth (31), of a second flow (P2) of cooling liquid;
- an exit duct (50) in fluidic communication with the first duct (20) and with the second duct (30), suitable for permitting the exit of said first and second flow (P1, P2) of cooling liquid;
- a closure element (80) movable between a closed position, in which the closure element (80) is positioned respectively on said first and second mouth (21, 31) and obstructs the entrance of cooling liquid from the first duct (20) and the second duct (30), and an open position, in which it is distanced from said first and second mouth (21, 31) and permits the fluidic communication between the first duct (20) and the second duct (30) with the exit duct (50);
- command means (90) comprising a command element (91) translatable along an axis suitable for engaging and moving the closure element (80) between the aforesaid closed and open positions;
the valve group is **characterized by** the fact that the first duct (20), at least in its final portion, such as the first mouth (21), extends around the second duct (30), at least in its final portion, such as the second mouth (31).

2. Valve group (10) according to claim 1, wherein the closure element (80), in the closed position, is positioned so as to seal said first (21) and second mouth (31).

3. Valve group (10) according to any of the previous claims, wherein the command means (90), in the closed position, exert a greater action than the action caused by the first (P1) and by the second flow (P2) on the closure element (80).

4. Valve group (10) according to any of the previous claims, wherein the command element (91) engages, in a direct manner, the closure element (80) which translates axially.

5. Valve group (10) according to claim 4, wherein the closure element (80) comprises a stem (81) connected to the command element (91) and a head (82) suitable for being positioned, moving the stem (81) in translation, on the first mouth (21) and on the second mouth (31).

6. Valve group (10) according to any of the claims from 1 to 3, wherein the command element (91) engages indirectly the closure element (80), by means of a lever (92) suitable for transforming the axial movement of the command element (91) into rotary movement of the closure element (80).

7. Valve group (10) according to claim 6, wherein the closure element (80) comprises a pin (85) connected to the lever (92) and a blade (86) suitable for being positioned, rotating said pin (85), on the first mouth (21) and on the second mouth (31).

8. Valve group (10) according to any of the previous claims, wherein the command means (80) comprise an actuator, preferably pneumatic.

9. Valve group (10) according to any of the previous claims, comprising a mixing chamber (40), between the first mouth (21) and the second mouth (31) and the exit duct (50), suitable for containing the closure element (80) between the closed position and the open position.

10. Cooling system (1), for endothermic motor vehicles with double cylinder bank (501), comprising:
- a cooling pump (100) suitable for moving two main flows (PP1, PP2) of cooling liquid towards two respective cylinder banks(502, 503) of the endothermic motor through two respective main ducts (2,3), wherein the main ducts comprise main entrance ducts (2', 3'), in input to the respective cylinder bank and main exit ducts (2", 3"), in output from the respective cylinder bank and wherein the main exit ducts (2", 3") are in fluidic communication with a single main return duct (5") to the pump (100);
- a valve group (10) according to any of the previous claims, suitable for controlling the cooling of further vehicle components, wherein the first duct (20) and the second duct (30) of said valve group (10), are respectively in communication with two capillary ducts (22, 33) bled off from two main ducts (2, 3) and wherein the exit duct (50) is in fluidic communication with a return exit duct (5') from the pump (100);
- a pump entrance duct (5), in input to the cooling pump (100), in fluidic communication with the main return duct (5") from the cylinder banks (502, 503) and the return exit duct (5') from the valve group (10).

11. Cooling system (1) according to claim 10, wherein the capillary ducts (22, 32) are suitable for permitting the passage of the first flow (P1) and of the second flow (P2) and are substantially sized to a smaller order of magnitude than the respective main ducts (2,3).

12. Cooling system (1) according to claim 10 and 11, wherein in the closed position the valve group (10) keeps the first and the second flows (P1, P2) separate and thereby keeps the respective main flows (PP1, PP2) separate.

## Patentansprüche

1. Ventilgruppe (10) für ein Kühlsystem für Fahrzeuge, die umfasst:
- einen ersten Kanal (20), der geeignet ist, den Eintritt einer ersten Strömung (P1) von Kühlflüssigkeit durch eine erste Mündung (21) zuzulassen;
- einen zweiten Kanal (30), der getrennt von dem ersten Kanal (20) ist, der geeignet ist, den Eintritt einer zweiten Strömung (P2) von Kühlflüssigkeit durch eine zweite Mündung (31) zuzulassen;
- einen Austrittskanal (50) in einer Fluidverbindung mit dem ersten Kanal (20) und mit dem zweiten Kanal (30), der geeignet ist, den Austritt der ersten und zweiten Strömung (P1, P2) von Kühlfluid zuzulassen;
- ein Verschlusselement (80), das beweglich ist zwischen einer geschlossenen Position, in der das Verschlusselement (80) jeweils auf der ersten und zweiten Mündung (21, 31) positioniert ist und den Eintritt von Kühlflüssigkeit von dem ersten Kanal (20) und dem zweiten Kanal (30) versperrt, und einer offenen Position, in der es von den ersten und zweiten Mündungen (21, 31) entfernt ist und die Fluidverbindung zwischen dem ersten Kanal (20) und dem zweiten Kanal (30) mit dem Austrittskanal (50) zulässt;
- Steuermittel (90), die ein Steuerelement (91) umfassen, das entlang einer Achse verschiebbar ist, das geeignet ist, in das Verschlusselement (80) einzugreifen und es zwischen den vorgenannten geschlossenen und offenen Positionen zu bewegen;
wobei die Ventilgruppe durch die Tatsache gekennzeichnet ist, dass der erste Kanal (20) sich wenigstens in seinem Endabschnitt, wie etwa der ersten Mündung (21), um den zweiten Kanal (30) wenigstens in dessen Endabschnitt, wie etwa der zweiten Mündung (31), herum erstreckt.

2. Ventilgruppe (10) nach Anspruch 1, wobei das Verschlusselement (80) in der geschlossenen Position derart positioniert ist, dass es die erste (21) und die zweite Mündung (31) abdichtet.

3. Ventilgruppe (10) nach einem der vorhergehenden Ansprüche, wobei die Steuermittel (90) in dem geschlossenen Zustand eine größere Wirkung auf das Verschlusselement (80) ausüben als die Wirkung, die durch die erste (P1) und durch die zweite Strömung (P2) auf das Verschlusselement (80) bewirkt werden.

4. Ventilgruppe (10) nach einem der vorhergehenden Ansprüche, wobei das Steuerelement (91) in einer direkten Weise in das Verschlusselement (80) eingreift, das sich axial verschiebt.

5. Ventilgruppe (10) nach Anspruch 4, wobei das Verschlusselement (80) einen Schaft (81), der mit dem Steuerelement (91) verbunden ist, und einen Kopf (82) umfasst, der geeignet ist, auf der ersten Mündung (21) und auf der zweiten Mündung (31) positioniert zu werden, indem der Schaft (81) verschiebend bewegt wird.

6. Ventilgruppe (10) nach einem Ansprüche 1 bis 3, wobei das Steuerelement (91) mittels eines Hebels (92), der geeignet ist, die Axialbewegung des Steuerelements (91) in eine Drehbewegung des Verschlusselements (80) umzuwandeln, indirekt in das Verschlusselement (80) eingreift.

7. Ventilgruppe (10) nach Anspruch 6, wobei das Verschlusselement (80) einen Stift (85), der mit dem Hebel (92) verbunden ist, und ein Blatt (86) umfasst, das geeignet ist auf der ersten Mündung (21) und auf der zweiten Mündung (31), positioniert zu werden, indem der Stift (85) gedreht wird.

8. Ventilgruppe (10) nach einem der vorhergehenden Ansprüche, wobei die Steuermittel (80) einen Aktuator, der vorzugsweise pneumatisch ist, umfassen.

9. Ventilgruppe (10) nach einem der vorhergehenden Ansprüche, die eine Mischkammer (40) zwischen der ersten Mündung (21) und der zweiten Mündung (31) und dem Austrittskanal (50) umfasst, die geeignet ist, um das Verschlusselement (80) zwischen der geschlossenen Position und der offenen Position zu enthalten.

10. Kühlsystem (1) für endotherme Motorfahrzeuge mit einer doppelten Zylinderreihe (501), das umfasst:
- eine Kühlpumpe (100), die geeignet ist, zwei Hauptströmungen (PP1, PP2) von Kühlflüssigkeit durch zwei jeweilige Hauptkanäle (2, 3) in Richtung von zwei jeweiligen Zylinderreihen (502, 503) des endothermen Motors zu bewegen, wobei die Hauptkanäle Haupteintrittskanäle (2', 3') im Eingang zu der jeweiligen Zylinderreihe und Hauptaustrittskanäle (2", 3") im Ausgang von der jeweiligen Zylinderreihe umfassen und wobei die Hauptaustrittkanäle (2", 3") in einer Fluidverbindung mit einem einzelnen Hauptrückführungskanal (5") zu der Pumpe (100) stehen;
- eine Ventilgruppe (10) nach einem der vorhergehenden Ansprüche, die geeignet ist, die Kühlung weiterer Fahrzeugkomponenten zu steuern, wobei der erste Kanal (20) und der zweite Kanal (30) der Ventilgruppe (10) jeweils in Verbindung mit zwei Kapillarkanälen (22, 33) stehen, die von zwei Hauptkanälen (2, 3) abgeleitet werden, und wobei der Austrittskanal (50) in einer Fluidverbindung mit einem Rückführungsaustrittkanal (5') von der Pumpe (100) steht;
- einen Pumpeneintrittskanal (5) im Eingang zu der Kühlpumpe (100), der in einer Fluidverbindung mit dem Hauptrückführungskanal (5") von den Zylinderreihen (502, 503) und dem Rückführungsaustrittskanal (5') von der Ventilgruppe (10) steht.

11. Kühlsystem (1) nach Anspruch 10, wobei die Kapillarkanäle (22, 32) geeignet sind, den Durchgang der ersten Strömung (P1) und der zweiten Strömung (P2) zuzulassen, und um eine Größenordnung kleiner als die jeweiligen Hauptkanäle (2, 3) bemessen sind.

12. Kühlsystem (1) nach Anspruch 10 und 11, wobei die Ventilgruppe (10) in der geschlossenen Position die ersten und zweiten Strömungen (P1, P2) getrennt hält und dadurch die jeweiligen Hauptströmungen (PP1, PP2) getrennt hält.

## Revendications

1. Groupe soupape (10) pour un système de refroidissement pour véhicules comprenant :
- une première conduite (20) appropriée pour permettre l'entrée, via un premier orifice (21), d'un premier écoulement (P1) de liquide de refroidissement ;
- une seconde conduite (30), séparée de ladite première conduite (20), appropriée pour permettre l'entrée, via un second orifice (31), d'un second écoulement (P2) de liquide de refroidissement ;
- une conduite de sortie (50) en communication fluidique avec la première conduite (20) et avec la seconde conduite (30), appropriée pour permettre la sortie desdits premier et second écoulements (P1, P2) de liquide de refroidissement ;
- un élément de fermeture (80) mobile entre une position fermée, dans laquelle l'élément de fermeture (80) est positionné respectivement sur lesdits premier et second orifices (21, 31) et obstrue l'entrée de liquide de refroidissement depuis la première conduite (20) et la seconde conduite (30), et une position ouverte, dans laquelle il est mis à distance desdits premier et second orifices (21, 31) et permet la communication fluidique de la première conduite (20) et de la seconde conduite (30) avec la conduite de sortie (50) ;
- des moyens de commande (90) comprenant un élément de commande (91) déplaçable en translation translatable le long d'un axe approprié pour engager et déplacer l'élément de fermeture (80) entre les positions fermée et ouverte mentionnées ci-dessus ;
le groupe soupape est **caractérisé par le fait que** la première conduite (20), au moins dans sa portion finale, telle que le premier orifice (21), s'étend autour de la seconde conduite (30), au moins dans sa portion finale, telle que le second orifice (31).

2. Groupe soupape (10) selon la revendication 1, dans lequel l'élément de fermeture (80), dans la position fermée, est positionné de façon à sceller lesdits premier (21) et second orifices (31).

3. Groupe soupape (10) selon l'une quelconque des revendications précédentes, dans lequel les moyens de commande (90), dans la position fermée, exercent une action plus importante que l'action provoquée par le premier (P1) et le second écoulement (P2) sur l'élément de fermeture (80).

4. Groupe soupape (10) selon l'une quelconque des revendications précédentes, dans lequel l'élément de commande (91) engage, de manière directe, l'élément de fermeture (80) qui se déplace en translation axialement.

5. Groupe soupape (10) selon la revendication 4, dans lequel l'élément de fermeture (80) comprend une tige (81) raccordée à l'élément de commande (91) et une tête (82) appropriée pour être positionnée, déplaçant la tige (81) en translation, sur le premier orifice (21) et sur le second orifice (31).

6. Groupe soupape (10) selon l'une quelconque des revendications 1 à 3, dans lequel l'élément de commande (91) engage indirectement l'élément de fermeture (80), au moyen d'un levier (92) approprié pour transformer le mouvement axial de l'élément de commande (91) en mouvement rotatif de l'élément de fermeture (80).

7. Groupe soupape (10) selon la revendication 6, dans lequel l'élément de fermeture (80) comprend une broche (85) raccordée au levier (92) et une aube (86) appropriée pour être positionnée, mettant ladite broche (85) en rotation, sur le premier orifice (21) et sur le second orifice (31).

8. Groupe soupape (10) selon l'une quelconque des revendications précédentes, dans lequel les moyens de commande (90) comprennent un actionneur, de préférence pneumatique.

9. Groupe soupape (10) selon l'une quelconque des revendications précédentes, comprenant une chambre de mélange (40), entre le premier orifice (21) et le second orifice (31) et la conduite de sortie (50), appropriée pour contenir l'élément de fermeture (80) entre la position fermée et la position ouverte.

10. Système de refroidissement (1), pour véhicules à moteur endothermique avec une rangée à double cylindre (501), comprenant :
- une pompe de refroidissement (100) appropriée pour déplacer deux écoulements principaux (PP1, PP2) de liquide de refroidissement vers deux rangées de cylindres (502, 503) respectives du moteur endothermique via deux conduites principales (2, 3) respectives, dans lequel les conduites principales comprennent des conduites d'entrée principales (2', 3'), en entrée de la rangée de cylindres respective et des conduites de sortie principales (2", 3"), en sortie de la rangée de cylindres respective et dans lequel les conduites de sortie principales (2", 3") sont en communication fluidique avec une seule conduite de renvoi principale (5") à la pompe (100) ;
- un groupe soupape (10) selon l'une quelconque des revendications précédentes, approprié pour réguler le refroidissement de composants de véhicule supplémentaires, dans lequel la première conduite (20) et la seconde conduite (30) dudit groupe soupape (10) sont respectivement en communication avec deux conduites capillaires (22, 33) déchargées à partir de deux conduites principales (2, 3) et dans lequel la conduite de sortie (50) est en communication fluidique avec une conduite de sortie de renvoi (5') de la pompe (100) ;
- une conduite d'entrée de pompe (5), en entrée de la pompe de refroidissement (100), en communication fluidique avec la conduite de renvoi principale (5") des rangées de cylindres (502, 503) et la conduite de sortie de renvoi (5') du groupe soupape (10).

11. Système de refroidissement (1) selon la revendication 10, dans lequel les conduites capillaires (22, 32) sont appropriées pour permettre le passage du premier écoulement (P1) et du second écoulement (P2) et sont sensiblement dimensionnées à un ordre de grandeur plus petit que les conduites principales (2, 3) respectives.

12. Système de refroidissement (1) selon la revendication 10 et 11, dans lequel dans la position fermée, le groupe soupape (10) garde les premier et second écoulements (P1, P2) séparés et garde ainsi les écoulements principaux (PP1, PP2) respectifs séparés.
